# EUROPEAN PATENT APPLICATION

(11) **EP 1 441 516 A2**
(43) Date of publication of application: **28.07.2004**
(21) Application number: 04250139.5
(22) Date of filing: 13.01.2004
(51) Int. Cl.: H04N 5/76

(54) **Combination video system**

(30) Priority: 16.01.2003 KR 2002003135
(71) Applicant: Samsung Electronics Co., Ltd., Suwon 442-742, Gyeonggi-do (KR)
(72) Inventor: Yim, Man-gyu, 522-101, Samsung 5th Apt., Suji-eup Yongin-si Gyeonggi-do (KR)
(74) Representative: Derry, Paul Stefan

(57) **Abstract**

A combination system capable of controlling output signals and a method of controlling the same. The combination system includes a first device for generating first analogue audio/video signals by reproducing data recorded on a first recording medium, a first signal converting unit for converting the first analogue audio/video signals to first digital audio/video signals and outputting the same, and a second device for generating second digital audio/video signals by reproducing data recorded on a second recording medium, and outputting either the first or second audio/video signals through selection, and converting a scanning format of the selected video signal. A user of the combination system is able to enjoy high quality screen images and high quality sound because the A/V signals are supplied to a digital TV after the analogue A/V signals output from a VCR of the combination system are converted to digital A/V signals.

## Description

The present invention relates to a combination video reproduction and playback system, and to methods for controlling a combination video reproduction and playback system. In particular, but not exclusively, the invention relates to a combination system including a VCR and a DVDP which is capable of controlling output signals, and which supplies A/V signals to a display device after converting analogue A/V signals output from the VCR to digital A/V signals.

Recording and reproducing devices that are capable of recording A/V (audio/video) signals on a recording medium and reproducing the signals have been developed to include numerous functions in accordance with the introduction of digital signal processing and compression technologies.

A popular recording and reproducing device currently available is a VCR/DVDP combination system (hereinafter, referred to as a "combo"). A VCR/DVDP combo is a recording and reproducing device performing the complex functions of a video cassette recorder (VCR), and a digital video disk reproducer (DVDP). Both the VCR and the DVDP are housed in a single case. Such can be termed a dual source device, since it has two sources of signals.

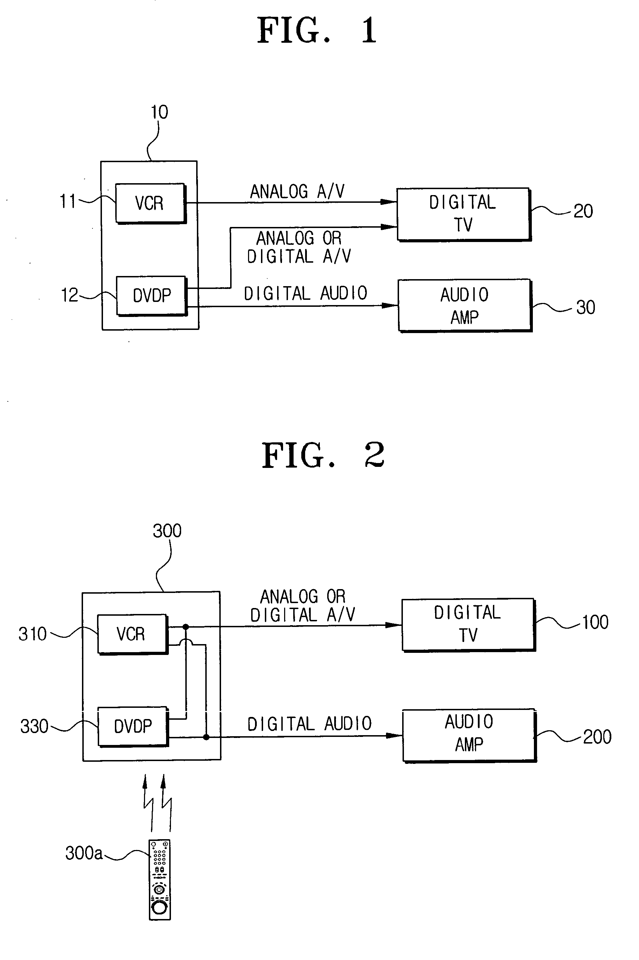

Figure 1 is a schematic diagram illustrating a conventional VCR/DVDP combo and two peripheral devices connected to the VCR/DVDP combo.

Referring to Figure 1, a conventional VCR/DVDP combo 10 comprises a VCR 11 for recording A/V signals on a magnetic tape of a cassette and reproducing the recorded A/V signals and a DVDP 12 for reproducing the A /V signals recorded on a DVD.

The VCR 11 and the DVDP 12 are formed as a single product, i.e., a VCR/DVDP combo 10, and a user can select between the VCR 11 and the DVDP 12. Further, individual functions of the VCR 11 and the DVDP 12 can be selected by the user by manipulating a remote controller (not shown), or a manipulating panel (not shown) provided on a front surface of the VCR/DVDP combo 10.

The VCR/DVDP combo 10 is connected to a digital TV 20, which is a peripheral device for receiving A/V signals reproduced in the VCR 11 or the DVDP 12, and an audio amplifier 30, which is a peripheral device for receiving audio signals reproduced in the DVDP 12.

Here, the A/V signals supplied from the VCR 11 of the VCR/DVDP combo 10 to the digital TV 20 are analogue composite video/audio signals, while the A/V signals supplied from the DVDP 12 to the digital TV 20 can be either analogue or digital signals. The signals supplied to the audio amplifier 30 are digital audio signals. The DVDP 12 supplies analogue composite video/audio signals or digital RGB video/composite video/audio signals.

If the conventional VCR/DVDP combo 10 is connected to an analogue TV (not shown), the VCR 11 supplies analogue A/V signals as described above, while the DVDP 12 supplies signals converted from digital to analogue.

By contrast, if the conventional VCR/DVDP combo 10 is connected to a digital TV 20, the DVDP 12 provides it with digital A/V signals including the RGB video signals. However, the VCR 11 is unable to provide the digital TV 20 with digital A/V signals.

Thus, even if the digital TV 20 provides a high quality screen and a high definition image, the user is unable to take advantage of the high quality screen or the high definition image when using the VCR as a source, and the RGB video signals cannot be used when the VCR mode is selected.

According to a first aspect of the invention, there is provided a combination video reproduction and playback system, comprising:
means for generating first analogue audio/video signals from signals recorded on a first recording medium,
means for converting the first analogue audio/video signals into first digital audio/video signals, and
means for generating second digital audio/video signals from digital data recorded on a second recording medium, and
means for selecting either the first or the second digital audio/video signals for output.

According to a second aspect of the invention, there is provided a method for controlling a combination video reproduction and playback system, comprising:
detecting a reproducing mode selected by a user;
in a VCR reproducing mode,
   converting an analogue audio/video signal into a digital audio/video signal; and
   converting the scanning format of the digital audio/video signal; and
   providing a peripheral device with the digital converted signal.

According to a third aspect of the invention, there is provided a method for operating a combination video reproduction and playback system, comprising:
generating analogue audio/video signal from signals recorded on a first recording medium, and converting the first analogue audio/video signals into first digital audio/video signals,
generating second digital audio/video signals from digital data recorded on a second recording medium; and
selecting either the first or second digital audio/video signals for output.

An embodiment of the present invention will now be described with reference to the accompanying drawings, in which:
Figure 1 is a schematic diagram illustrating a conventional VCR/DVDP combo and two peripheral devices connected thereto;
Figure 2 is a schematic diagram illustrating a combination system and two peripheral devices connected thereto according to the present invention;
Figure 3 is a schematic block diagram illustrating the combination system in Figure 2; and
Figure 4 is a flowchart illustrating a method of controlling output signals performed by the combination system in Figure 3.

In the following, well-known functions or constructions are not described in detail where they would obscure the invention in unnecessary detail.

Referring to Figure 2, a combination system 300 is a recording and reproducing device integrating a VCR 310 with a DVDP 330. It is connected to a digital TV 100, constituting a display device, and an audio amplifier 200, which is a digital sound output device, by means of separate transmission cables.

The combination system (hereinafter, referred to as the 'VCR/DVDP combo') 300 processes signals received from a remote controller 300a, which is an external input device, and transmits the displaying information to the digital TV 100. The external input device refers not only to the remote controller 300a, which transmits wireless. e.g. infrared signals, but also to other input devices such as a keyboard (not shown).

The VCR 310 reproduces recorded signals. The signals are recorded on a magnetic tape (not shown) in a video-cassette, which has been applied as the first recording media. The DVDP 330 is second device for reproducing digital data recorded on an optical recording medium (not shown). Examples of optical recording media include, but are not limited to, DVD, CD (compact disk) and VCD (video compact disk), among others.

The digital TV 100 comprises a digital display device (not shown), such as a conventional TV, and speakers (not shown). Other examples of digital display devices include a PDP (plasma display panel) TV or LCD (liquid crystal display) TV.

The audio amplifier 200 is a digital sound amplifying device which outputs a conventional analogue audio signal with micro-level noise When the digital A/V signals are input to the digital TV 100 the digital TV 100 provides image and Dolby® system sound with a quality higher than that of an analogue TV, e.g. a CRT (cathode ray tube) TV. A transmission cable connects an input terminal provided in the digital TV 100 to an output terminal (not shown) provided in the VCR/DVDP combo 300 and the audio amplifier 200.

The A/V signals supplied for the digital TV 100 from the VCR/DVDP combo 300 will now be described in greater detail.

The video signal component of the A/V signal supplied to the digital TV 100 from the DVDP 330 of the VCR/DVDP combo 300 can be a U.S type component video signal or a European type RGB video signal. The video signal component of the A/V signals is an analogue composite video signal. Hereinafter, component video signals and the RGB video signals will be identified as digital signals, while the composite video signals, such as composite video broadcast signal (CVBS), will be identified as analogue signals.

The digital component video signals comprise a luminance signal Y and two colour difference signals, P_{R-Y} and P_{B-Y}. The analogue composite video signals are a combination of the luminance signal Y and a colour signal C (=P_{R-Y} + P_{B-Y}). The audio signals supplied for the digital TV 100 are digital signals that can be converted into analogue signals when output.

The analogue A/V signals output from the VCR 310 of the VCR/DVDP combo 300 are converted to digital A/V signals, as either a component video signal or an RGB video signal. The digital video and the digital audio signals can then be supplied to the digital TV 100.

The digital TV 100 can output A/V signals of either an analogue or a digital type as a viewable signal in accordance with manipulation of the remote controller 300a.

For that purpose, the input terminal (not shown) of the digital TV has an analogue input terminal and a digital input terminal.

As described above, analogue A/V signals output from the VCR/DVDP combo 300 (e.g., the composite video signals that are analogue audio signals) are provided to the analogue input terminal of the digital TV 100. Digital A/V signals output from the VCR/DVDP combo 300 (e.g., the component video signals and any one of the RGB video signals that are digital audio signals) are provided to the digital input terminal of the digital TV 100. If the audio amplifier 200 has been connected to the VCR/DVDP combo 300, the digital audio signals are input to the audio amplifier 200.

For instance, if a DVDP reproducing mode is selected through manipulation of the remoter controller 300a, the analogue A/V signals and the digital A/V signals are output to the digital TV 100. The digital TV 100 then selects a signal corresponding to a view mode selected from an analogue view mode or a digital view mode. Thus, if the analogue view mode is selected, the digital TV 100 selects an analogue A/S signal input through the input terminal so as to be displayed.

If the DVDP reproducing mode and the digital view mode are selected through manipulation of the remote controller 300a, the DVDP 330 outputs the analogue A/V signals and the digital A/V signals to the digital TV 100. The digital TV 100 then selects the digital A/V signals input through the digital input terminal (not shown) so as to be displayed.

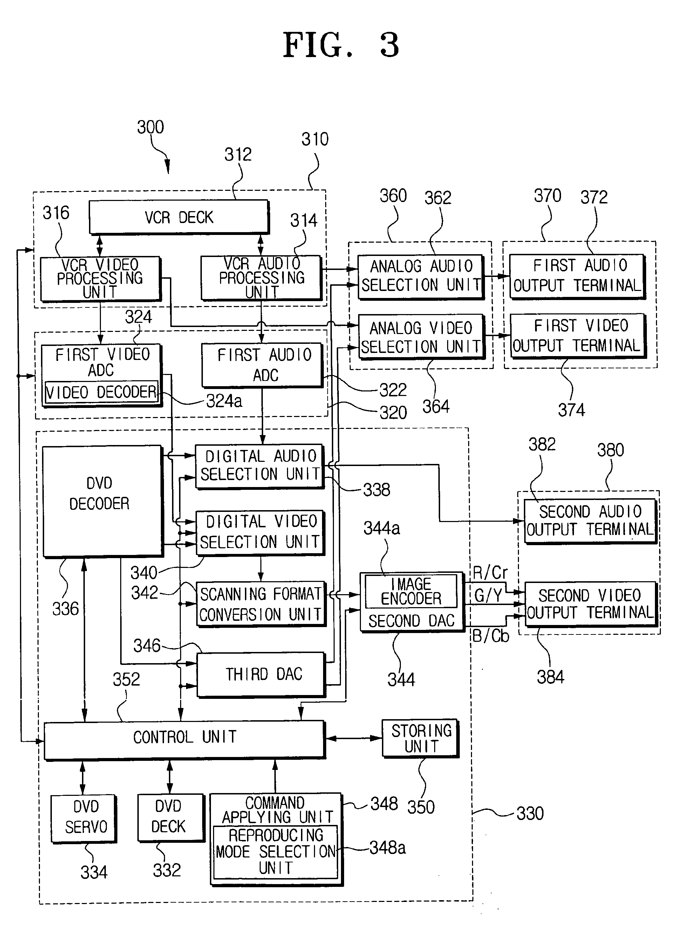

Figure 3 is a block diagram illustrating the VCR/DVDP combo 300 according to a preferred embodiment of the present invention.

The process of converting analogue A/V signals (e.g., CVBS signals) output from a VCR 310 to digital A/V signals is described in greater detail below. Referring to Figures 2 and 3, the VCR/DVDP combo 300 comprises a VCR 310, a first signal conversion unit 320, a DVDP 330, an analogue selection unit 360, a first output terminal 370, and a second output terminal 380.

The VCR 310 includes a VCR deck 312, a VCR audio processing unit 314 and a VCR video processing unit 316. The VCR deck 312 includes a head having magnetic characteristics when electric current is applied. The VCR deck 312 either records the video and audio signals on a magnetic tape, or reproduces the video and audio signals recorded on the magnetic tape in accordance with the strength of the magnetic characteristics applied to the head.

The VCR audio processing unit 314 converts the audio signals to be recorded on the magnetic tape of the cassette to a recording format through the VCR deck 312, and converts the audio signals reproduced by the VCR deck 312 to a reproducing format that can be easily recognized by a peripheral device, such as the digital TV 100.

The VCR video processing unit 316 converts the video signals to be recorded on the magnetic tape of the cassette to a recording format through the VCR deck 312, and converts the video signals reproduced by the VCR deck 312 to a reproducing format that can be easily recognized by a peripheral device such as the digital TV 100.

The signals output after being converted to a reproducing format by the VCR audio processing unit 314 and the VCR video processing unit 316 are the first analogue A/V signals. The first analogue A/V signals are input in the first signal conversion unit 320 and the analogue selection unit 360 that will be described in great detail below.

A VCR microcomputer can be provided to control the comprehensive operation of the VCR deck 312, the VCR audio processing unit 314 and the VCR video processing unit 316. However, preferably the control unit 352 provided in the DVDP 330 provides comprehensive control, which is described in greater detail below.

The first signal conversion unit 320 includes a first audio conversion unit 322 and a first video conversion unit 324. The first audio conversion unit 322 is an analogue/digital converter (ADC) for converting the first analogue audio signal output from the VCR audio processing unit 314 to the first digital audio signal, and outputs the same.

The first video conversion unit 324 is the ADC for converting the first analogue video signal output from the VCR video processing unit 316 to the first digital video signal, and outputs the same. The first digital video signal is output in a CCIR656 data format by a video decoder 324a, and has the characteristics of an interlaced scanning format. One example of a CCIR data format is Y : Cb : Cr = 4 : 2 : 2.

The DVDP 330 comprises a DVD deck 332, a DVD servo 334, a DVD decoder 336, a digital audio selection unit 338, a digital video selection unit 340, a scanning format conversion unit 342, a second signal conversion unit 344, a third signal conversion unit 346, a command applying unit 348, a storing unit 350, and a control unit 352.

The DVD deck 332 generates the second digital A/V signals by loading the data recorded on a DVD to reproduce the DVD. The DVD servo 334 controls position and velocity of the DVD deck 332. The DVD decoder 336 decodes the generated second digital audio/video signals, and outputs the same. The second digital video signals generally have an interlaced scanning format.

The first digital audio signals output from the first audio ADC 322 and the second digital audio signals output from the DVD decoder 336 are input to the digital audio selection unit 338. The first digital video signals output from the video decoded 324a of the first video ADC 324 and the second digital video signals output from the DVD decoder 336 are input in the digital video selection unit 340.

The digital audio/video selection units 338 and 340 are realised with a switch such as a multiplexer. The digital audio/video selection units 338, 340 can select any one of the input signals and output the same in accordance with a selection made by a reproducing mode selection unit 348 and a control signal by the control unit 352. Selection of the input signals to the digital audio/video selection units 338, 340 will be described in greater detail below..

For example, if a VCR reproducing mode is selected by the reproducing mode selection unit 348a, the digital audio selection unit 338 selects the first digital audio signal output from the first audio ADC 322, and outputs the same to a second audio output terminal 382. The digital video selection unit 340 selects the first digital video signal with the CCIP656 data format output from the first video ADC 324, and outputs the same to the scanning format conversion unit 342.

The scanning format conversion unit 342 converts the scanning format of the video signals selected and output by the digital video selection unit 340. For example, the first and the second digital video signals input to the digital video selection unit 340 from the first video ADC 324 and the DVD decoder 336 are in interlaced scanning format. The scanning formation conversion unit 342 then converts the scanning format of the video signals selected by the digital video selection unit 340 to a progressive scanning format from the interlaced scanning format. The progressive scanning format provides the viewer with higher quality images than the interlaced scanning. Since scanning format conversion is well known, description of it is omitted here.

The image encoder 344a converts the video signal of the converted scanning format to a signal displayable on a digital display device. Signals displayable on the digital display device are known RGB video signals or unknown YCbCr video signals, etc.

The second signal conversion unit 344 is a digital/analogue converter (DAC) for converting the video signals output from the video encoder 344a into analogue signals. The video signals converted from the second DAC 344 are fed to the second video output terminal 384.

The third DAC 346 converts the second digital A/V signals output from the DVD decoder 336 to the second analogue A/V signals. The second analogue audio signals converted from the third DAC 346 are output to the analogue audio selection unit 362, and the second analogue video signals are output to the analogue video selection unit 364.

The command applying unit 348 is a user interface for generating commands to select or manipulate functions assisted by the VCR/DVDP combo 300 for the control unit 352. The command applying unit 348 comprises a plurality of numerical keys, direction keys, confirmation keys, among others, and resides. in the main body of the VCR/DVDP combo 300. It is also preferable to include the infrared receiver in the main body, for receiving user input from an external input device, such as the remote controller 300a.

The command applying unit 348 and the remote controller 300a have a reproducing mode selection unit 348a for applying a selection signal to the control unit 352 for either the VCR reproducing mode or the DVDP reproducing mode.

A control program is stored in the storing unit 350 to control and manage comprehensive operation or the VCR/DVDP combo 300. The control unit 352 controls comprehensive operation of the VCR/DVDP combo 300 in accordance with the reproducing mode selection signal applied from the reproducing mode selection unit 348a upon input or selection of a key by the user using the control program stored in the storing unit 350.

Operation of the control unit 352 is now described in further detail. The control unit 352 controls the first ADC 320, which converts the first analogue A/V signal output from the VCR 310 to the first digital A/V signals. The control unit 352 also controls conversion of the video signal of a converted scanning format to a displayable signal by controlling the second DAC 344.

The control unit 352 also controls reproducing of the VCR 310 and the DVDP 330 in accordance with a reproducing mode selection signal from the reproducing mode selection unit 348a. The control unit 352 further controls the signal selection of the analogue selection unit 360 and the digital audio/video selection units 338, 340.

The analogue selection unit 360 has an analogue audio selection unit 362 and an analogue video selection unit 364. The first analogue audio signal, which is output from the VCR audio processing unit 314, and/or the second analogue audio signal, which is output from the third DAC 346, are input to the analogue audio selection unit 362. The first analogue video signal, which is output from the VCR video processing unit 316, and/or the second analogue video signal, which is output from the third DAC 346 is input to the analogue video selection unit 364.

The analogue audio/video selection units 362, 364 are realized by switches, such as a multiplexer, so as to select any one of the input signals through selection by the reproducing mode selection unit 348a, and control by the control unit 352.

For example, if a VCR reproducing mode is selected by the reproducing mode selection unit 348a, the analogue audio selection unit 362 selects the first analogue audio signal input from the VCR audio processing unit 314, and outputs the same to a first radio ouput terminal 372. Similarly, the analogue video selection unit 364 selects the first analogue video signal output from the VCR video processing unit 316, and outputs the same to a first video output terminal 374.

The first output terminal 370 is a composite output terminal comprising the first audio output terminal 372 and the first video output terminal 374. The first audio output terminal 372 supplies the analogue audio signals output from the analogue audio selection unit 362 to speakers provided in the digital TV 100. The first video output terminal 374 supplies the analogue video signals output from the analogue video selection unit 364 to the digital TV 100.

The second output terminal 380 is a component output terminal comprising a second audio output terminal 382 and a second video output terminal 384. The second audio output terminal 382 supplies the digital audio signals output from the digital audio selection unit 338 to the speakers provided in the digital TV 100, or to the audio amplifier 200. As described above, the second audio output terminal 382 is connected to an input terminal of the audio amplifier 200. Thus, the digital audio signals output from the digital audio selection unit 338 are supplied to the audio amplifier 200. The second video output terminal 384 supplies the RGB video signals or the YCbCr video signals output from the second DAC 344 to the digital TV 100.

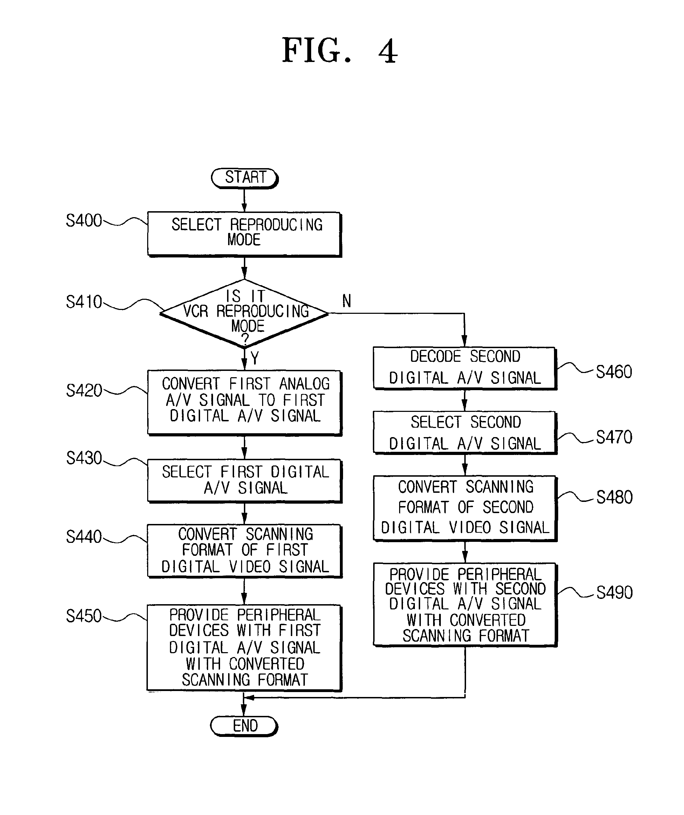

Figure 4 is a flowchart illustrating a method of controlling output signals by the VCR/DVDP combo in Figure 3.

Referring to Figures 2 to 4, once a reproducing mode is selected by the reproducing mode selection unit 348a or the command applying unit 348 (step S400), the control unit 352 determines whether or not a VCR reproducing mode has been selected (decision step S410). If a VCR reproducing mode was selected ("Yes" path from decision step S410), the first signal conversion unit 320 converts the first analogue A/V signals generated from the VCR 310 according to controls generated by the control unit 352 into the first digital A/V signals (S420).

After step 420 is performed, the digital audio selection unit 338 selects either the first digital audio signal or the second digital audio signal output from the DVD decoder 336 as the selected first digital audio signal. The digital video selection unit 340 also selects either the first digital video signal or the second digital video signal output from the DVD decoder 336 (S430) as the selected first digital video signal..

The scanning format conversion unit 342 converts the scanning format of the selected first digital video signal to a progressive scanning format according to control signals generated by the control unit 352. The second DAC 344 converts the first digital video signal of a converted scanning format to the RGB video signals or YCbCr video signals displayable on the digital TV 100 (S440).

As a result, the first selected digital A/V signals of a converted scanning format are supplied to a peripheral device, such as the digital TV 100, through the second output terminal 380 (S450). The first analogue A/V signals are not supplied to a peripheral device such as the digital TV 100 through the first output terminal 370 when steps S420 to S450 are performed.

If however, a DVDP reproducing mode is determined to have been selected in step S410 ("No" path from decision step S410), the DVD decoder 336 decodes the second digital A/V signals according to controls generated by the control unit 352 (S460).

After step S460 is performed, the digital audio selection unit 338 selects either the first digital audio signal or the second digital audio signal as the selected second digital audio signal. Similarly, the digital video selection unit 340 also selects either the first digital video signal or the second video signal as the selected second digital video signal(S470).

The scanning format conversion unit 342 converts the scanning format of the selected second digital video signal to a progressive scanning format through controls generated by the control unit 352. The second DAC 344 converts the second digital video signal of a converted scanning format to the RGB video signals or YCbCr video signals displayable on the digital TV 100 (S480).

The second digital A/V signal of a converted scanning format is supplied to a peripheral device, such as the digital TV 100, through the second output terminal 380 (S490). As a result, the second analogue A/V signals converted through the third DAC 346 are not supplied to a peripheral device such as the digital TV 100 when steps S460 to S490 are performed.

As described above, when the VCR/DVDP combo 300 is connected to either the digital TV 100 or an analogue TV, the A/V signals supplied from the VCR 310 are the first analogue A/V signals and the first digital A/V signals, while the A/V signals supplied from the DVDP 330 are the second analogue A/V signals and the second digital A/V signals. Therefore analogue or digital A/V signals are selectively output in accordance with the viewing mode set in the digital TV 100 or the analogue TV when connected as a peripheral device.

The VCR/DVDP combo 300 as described above also comprises a channel selection unit (not shown) and an external input terminal (not shown).

The channel selection unit is a tuner receiving public wave broadcast signals. The channel selection unit, which is connected to an antenna for selecting a predetermined channel from a plurality of received channels, tunes the broadcast signals received through the antenna, and supplies the same to the first ADC 320. The broadcast signals, converted and output as the digital A/V signals from the first ADC 320, are respectively input into the digital audio selection unit 338 and the digital video selection unit 340.

The VCR/DVDP combo 300 can support various available A/V signal sources, such as digital satellite broadcasting, cable broadcasting, network broadcasting through Internet, and so on. Therefore, the channel selection unit can select not only the broadcasting signals but also the channels with respect to other A/V signals.

The external input terminal supplies signals input from external appliances, such as a camcorder to the analogue selection unit 360. If analogue A/V signals are input from an external appliance connected to the external input terminal, the VCR 310 records the input analogue A/V signals on a magnetic tape. Additionally, the VCR/DVDP combo 300 outputs the analogue A/V signals input from the external appliance to the first output terminal 370. The VCR/DVDP combo 300 then converts the analogue A/V signals input from the external appliance into digital A/V signals, which are output to the second output terminal 380 and displayed on the digital TV.

In the combination system, the analogue A/V signals output from a VCR of the combination system are converted to digital A/V signals and supplied to a peripheral device, such as a digital TV. As a result, a user is able to view high quality screen images and listen to high quality sound by virtue of the conversion of the scanning format of the video signals to a progressive scanning format prior to supply to the digital TV.

While the invention has been shown and described with reference to a certain preferred embodiment thereof, it will be understood by those skilled in the art that various changes in form and details may be made therein without departing from the scope of the claims.

## Claims

**1.** A combination video reproduction and playback system (300), comprising:
means (316, 314) for generating first analogue audio/video signals from signals recorded on a first recording medium,
means (322, 423) for converting the first analogue audio/video signals into first digital audio/video signals, and
means (336) for generating second digital audio/video signals from digital data recorded on a second recording medium, and
means (338, 340) for selecting either the first or the second digital audio/video signals for output.

**2.** A system according to claim 1, comprising a converter (342) for converting a scanning format of the selected video signal.

**3.** A system according to claim 2, further comprising:
an image encoding device (344a), for encoding the scanning format converted video signal into a displayable signal format.

**4.** A system according to claim 3, wherein the displayable signal format comprises either a RGB video signal or a YCbCr video signal.

**5.** A system according to any preceding claim, wherein the means for generating first analogue audio/video signals comprise VCR video and audio processing units.

**6.** A system according to any preceding claim , wherein the first signal converting unit comprises separate video audio analogue-to-digital converters.

**7.** A system according to any preceding claim, wherein the selecting means comprises separate digital audio and digital video selection units.

**8.** A system according to claim 7, further comprising a scanning format unit for formatting the selected digital video signal, preferably from an interlaced scanning format to a progressive scanning format.

**9.** A method for controlling a combination video reproduction and playback system (300), comprising:
detecting a reproducing mode selected by a user;
in a VCR reproducing mode,
converting an analogue audio/video signal into a digital audio/video signal; and
converting the scanning format of the digital audio/video signal; and
providing a peripheral device with the digital converted signal.

**11.** A method according to claim 10, further comprising:
if the selected reproducing mode is not a VCR reproducing mode,
decoding a second digital audio/video signal;
converting a scanning format of the second digital audio/video signal; and
providing the digital converted second digital signal to a peripheral device (100).

**12.** A method according to claim 10 or claim 11, wherein the converting step comprises converting from an interlaced to a progressive scanning format.

**13.** A method for operating a combination video reproduction and playback system, comprising:
generating analogue audio/video signal from signals recorded on a first recording medium, and converting the first analogue audio/video signals into first digital audio/video signals,
generating second digital audio/video signals from digital data recorded on a second recording medium; and
selecting either the first or second digital audio/video signals for output.

**14.** A method according to claim 13, further comprising converting a scanning format of the selected video signal.

**15.** A method according to claim 14, further comprising encoding the converted scanning format selected video signal into a displayable signal format.

**16.** A method according to claim 15, wherein the displayable signal format comprises either a RGB video signal or a YCbCr video signal.

**17.** A method according to any of claims 13 to 16, wherein generating the analogue audio/video signal comprises operating a VCR video processing unit (316) and a VCR audio processing unit (314).

**18.** A method according to any of claims 13 to 17, wherein the step of converting comprises operating a video analogue-to-digital converter (423) and an audio analogue-to-digital converter (322).

**19.** A method according to any of claims 13 to 18, comprising selecting the first or second digital audio signals separately from selecting the first or second digital video signals.

**20.** A method according to claim 19, further comprising formatting the selected digital video signal, preferably from an interlaced scanning format to a progressive scanning format.

**21.** A combination video reproduction and playback system, comprising:
a first device for generating first analogue audio/video signals by reproducing data recorded on a first recording medium,
a first signal converting unit for converting the first analogue audio/video signals into first digital audio/video signals and outputting the first digital audio/video signals, and
a second device for generating second digital audio/video signals by reproducing data recorded on a second recording medium, and outputting either the first or second digital audio/video signals as selected digital audio/video signals.

**22.** The combination video reproduction and playback system according to claim 21, wherein the second device comprises a converter for converting a scanning format of the selected video signal.

**23.** The combination video reproduction and playback system according to claim 22, further comprising:
an image encoding device, for encoding the scanning format converted selected video signal to change the selected video signal from a digital video signal to a displayable signal format.

**24.** The combination video reproduction and playback system according to claim 23, wherein the displayable signal format comprises either a RGB video signal or a YCbCr video signal.

**25.** The combination video reproduction and playback system according to claim 21, wherein the first device comprises:
a VCR video processing unit; and
a VCR audio processing unit.

**26.** The combination video reproduction and playback system according to claim 21, wherein the first signal converting unit comprises:
a first video analogue-to-digital converter; and
a first audio analogue-to-digital converter.

**27.** The combination video reproduction and playback system according to claim 21, wherein the second device comprises:
a digital audio selection unit for receiving the first and second digital audio signals and selecting either the first or second digital audio signals; and
a digital video selection unit for receiving the first and second digital video signals and selecting either the first or second digital video signals.

**28.** The combination video reproduction and playback system according to claim 27, further comprising:
a scanning format unit for receiving the selected digital video signal and formatting the digital video signal.

**29.** The combination video reproduction and playback system according to claim 28, wherein the scanning format unit formats the digital video signal from an interlaced scanning format to a progressive scanning format.

**30.** A method for controlling a combination video reproduction and playback system, comprising:
selecting a reproducing mode by a user;
determining whether the selected reproducing mode is a VCR reproducing mode; converting a first analogue audio/video signal into a first digital audio/video signal if the selected reproducing mode is a VCR reproducing mode; and
providing a peripheral device with a converted scanning format first digital audio/video signal.

**31.** The method for controlling the combination video reproduction and playback system according to claim 30, wherein the providing step comprises:
selecting the first digital audio/video signal instead of a second digital audio/video signal;
converting a scanning format of the first digital audio/video signal from a first scanning format to a second scanning format; and
outputting the second scanning format first digital signal through a second video output terminal to a peripheral device.

**32.** The method for controlling the combination video reproduction and playback system according to claim 31, wherein the first scanning format is an interlaced scanning format, and the second scanning format is a progressive scanning format.

**33.** The method for controlling the combination video reproduction and playback system according to claim 31, wherein the peripheral device includes a digital television.

**34.** The method for controlling the combination video reproduction and playback system according to claim 30, further comprising:
decoding a second digital audio/video signal if the selected reproducing mode is not a VCR reproducing mode;
selecting a second digital audio/video signal instead of a first digital audio/video signal;
converting a scanning format of the second digital audio/video signal from a first scanning format to a second scanning format; and
outputting the second scanning format second digital signal through a second video output terminal to a peripheral device.

**35.** The method for controlling the combination video reproduction and playback system according to claim 34, wherein the first scanning format is an interlaced scanning format, and the second scanning format is a progressive scanning format.

**36.** The method for controlling the combination video reproduction and playback system according to claim 14 wherein the peripheral device includes a digital television.

**37.** A method for operating a combination video reproduction and playback system, comprising:
generating a first analogue audio/video signal by reproducing data recorded on a first recording medium,
converting the first analogue audio/video signals into first digital audio/video signals and outputting the first digital audio/video signals, and
generating second digital audio/video signals by reproducing data recorded on a second recording medium; and
outputting either the first or second digital audio/video signals as selected digital audio/video signals.

**38.** The method for operating a combination video reproduction and playback system according to claim 21, further comprising converting a scanning format of the selected video signal.

**39.** The method for operating a combination video reproduction and playback system according to claim 38, further comprising:
encoding the converted scanning format selected video signal to change the selected video signal from a digital video signal to a displayable signal format.

**40.** The method for operating a combination video reproduction and playback system according to claim 39, wherein the displayable signal format comprises either a RGB video signal or a YCbCr video signal.

**41.** The method for operating a combination video reproduction and playback system according to claim 37, wherein the step of generating a first analogue audio/video signal comprises:
operating a VCR video processing unit and a VCR audio processing unit to produce the analogue audio/video signals.

**42.** The method for operating a combination video reproduction and playback system according to claim 37, wherein the step of converting the first analogue audio/video signals comprises:
operating a first video analogue-to-digital converter and a first audio analogue-to-digital converter to produce the first digital audio/video signals.

**43.** The method for operating a combination video reproduction and playback system according to claim 37, further comprising:
receiving the first and second digital audio signals and selecting either the first or second digital audio signals; and
receiving the first and second digital video signals and selecting either the first or second digital video signals.

**44.** The method for operating a combination video reproduction and playback system according to claim 43, further comprising:
receiving the selected digital video signal and formatting the digital video signal.

**45.** The method for operating a combination video reproduction and playback system according to claim 44, wherein the step of formatting the digital video signal comprises:
formatting the digital video signal from an interlaced scanning format to a progressive scanning format.
